# EUROPEAN PATENT SPECIFICATION

(11) **EP 3 254 490 B1**
(45) Date of publication and mention of the grant of the patent: **30.01.2019**
(21) Application number: 15816600.9
(22) Date of filing: 02.12.2015
(51) Int. Cl.: H04W 24/08, H04L 29/06, H04W 84/12

(54) **UNIFIED SERVICE DISCOVERY WITH PEER-ASSISTED RESOURCE MANAGEMENT FOR SERVICE MEDIATION AND ADDRESSING CONTROL IN WIFI-MIRACAST**
VEREINHEITLICHTE DIENSTENTDECKUNG MIT PEER-UNTERSTÜTZER RESSOURCENVERWALTUNG FÜR DIENSTVERMITTLUNG UND KONTROLLADRESSIERUNG IN WIFI-MIRACAST
DÉCOUVERTE DE SERVICE UNIFIÉ AVEC GESTION DES RESSOURCES ASSISTÉE PAR HOMOLOGUE PERMETTANT UNE MÉDIATION DE SERVICE ET UNE COMMANDE D'ADRESSAGE DANS UN RÉSEAU WI-FI MIRACAST

(30) Priority: 05.02.2015 US 201562112574 P; 15.07.2015 US 201514799851
(43) Date of publication of application: 13.12.2017
(73) Proprietor: Qualcomm Incorporated, San Diego, CA 92121-1714 (US)
(72) Inventor: RABII, Khosro Mohammed, San Diego, California 92121-1714 (US); SUBRAMANIAM, Vijay Naicker, San Diego, California 92121-1714 (US); KAFLE, Padam Lal, San Diego, California 92121-1714 (US); SHAUKAT, Fawad, San Diego, California 92121-1714 (US); BALASUBRAMANYAM, Shivakumar, San Diego, California 92121-1714 (US); PRAVEENKUMAR, Sanigepalli, San Diego, California 92121-1714 (US)
(74) Representative: Tomkins & Co
(86) International application number: PCT/US2015/063317
(87) International publication number: WO 2016/126309

(56) References cited:
- EP-A1- 1 783 953
- WO-A1-2008/046144
- WO-A1-2013/056031
- US-A1- 2015 026 735

## Description

### BACKGROUND

WO 2013056031 discuses a feedback channel for wireless display devices. WO 2018046144 discuses media distribution in a wireless network.

Conventional wireless media delivery platforms (e.g., WiFi Miracast® Revision 1, Apple AirPlay®, Wi-Di, etc.) are largely conceived to wirelessly mimic high definition multimedia interface (HDMI) media streams using Moving Picture Experts Group (MPEG) transport streams. For example, a user may push a button on a smartphone to wirelessly project streaming MPEG format imagery onto one or more nearby connected monitors and/or speakers.

Unicast, broadcast, multicast, and peercast, network filtering topologies can be used in wireless media delivery platforms, such as WiFi Miracast®. However, delivering multimedia data from a multimedia server to multiple clients for acceptable Quality of Service (QoS) and Quality of Experience (QoE), depends entirely on scalability of service infrastructure, and as such, scalable multimedia data distribution in wireless media delivery platforms requires using multicast. Because of the distributed coordination function (DCF) of WiFi and unicast performance uncertainties, for applications demanding low-latency/near-realtime response (e.g., multi-channel-audio such as high definition 7.1 surround sound, multi-channel-video, etc.), unicast delivery in wireless media delivery platforms, such as WiFi Miracast®,
to a large number of receivers is generally impossible. For example, when sending uncompressed baseband audio to multiple different speakers via WiFi Miracast®, the bandwidth requirements for making unicast transmissions to each speaker may exceed the total available bandwidth available in a WiFi Miracast® system. Therefore, when the multicast transmission rate is sufficient, multicast is a viable alternative for transmission applications demanding low-latency/near-realtime response (e.g., multi-channel-audio such as high definition 7.1 surround sound, multi-channel-video, etc.) to a large number of receiving devices.

Content Delivery Network (CDN), Network Layer Multicast, and P2P Content Distribution are multicast strategies that are regularly used for group distribution of multimedia data. However, supporting multicast in such wireless media delivery platforms depends on the high level operating system of the computing devices supporting multicast routing protocol or requires effective access control and network management, which are capabilities many computing devices do not have. Additionally, because of inherent unreliability of a wireless network, realtime multimedia data distribution with group communication packets in wireless media delivery platforms, such as WiFi Miracast®, requires error resiliency for acceptable quality that current multicast strategies for wireless media delivery platforms cannot provide.

Positive acknowledgment is the lynchpin of carrier sense multiple access with collision avoidance (CSMA/CA) for WiFi to optimize channel access and connection capacity. Although wireless media delivery platforms should support multicast, because of issues with media access control (MAC) unfairness, losses, and effective low channel bandwidth (BW), current standard WiFi multicast does not enable current wireless media delivery platforms, such as WiFi Miracast®, to support applications demanding low-latency/near-realtime response (e.g., multi-channel-audio such as high definition 7.1 surround sound, multi-channel-video, etc.). Current 802.11 wireless standard protocols (i.e., WiFi) for reliable multicast are designed to function independent of the application layer and the application layer's data transport protocols, and do not enable current wireless media delivery platforms (e.g., WiFi Miracast®) to support applications demanding low-latency/near-realtime response (e.g., multi-channel-audio such as high definition 7.1 surround sound, multi-channel-video, etc.). Depending on the source of channel distortions, current 802.11 WiFi protocols for reliable multicast use brute force to blindly repeat frames or packets, which rarely enhances WiFi transmission reliability. Additionally, current 802.11 WiFi protocols for reliable multicast often leverage low-modulation and coding scheme (MCS) unicast to transmit content data rather than providing actual multicast service, which is equally flawed because low-MCS unicast can purge all the channel efficiency intended to be achieved by using multicast.

### SUMMARY

The invention is set out in the appended set of claims. The embodiments and/or examples of the following description which are not covered by the appended claims are considered as not being part of the present invention.

Various embodiments, the features of which are set out in the appended claims, provide methods, devices, systems, and non-transitory process-readable storage media. These embodiments are particularly suitable for scalable data service distribution in WiFi Miracast®. In an embodiment, a processor of a source computing device in a WiFi Miracast® network may group all sink computing devices scheduled to receive a frame or packet of a service into a single multicast group and transmit a multicast frame or packet to the sink computing devices. In an embodiment, individual sink computing devices in a WiFi Miracast® network may be configured to monitor network resources and determine the quality of their respective wireless connections with the source computing device. In an embodiment, individual sink computing devices in a WiFi Miracast® network may be configured to send error logs or similar messages to the source computing device indicating the quality of service of the WiFi Miracast® communications received from the source computing device. In an embodiment, the source computing device may add multicast group member sink computing devices to a unicast group based at least in part on error logs received and/or not-received from the multicast group member sink computing devices.

An embodiment method for monitoring communication links in a wireless network may include a sink computing device receiving a multicast data stream carrying multimedia content from a source computing device over the wireless network, monitoring data elements within the received multicast data stream in real-time that include time or sequence information corresponding to the multimedia content, estimating a channel state based on the time or sequence information of the monitored data elements within the received multicast data stream, generating an error log including the estimated channel state, and transmitting the error log to the source computing device over an uplink channel of the wireless network.

In some embodiments, the method may further include the sink computing device determining whether an error log request is received from the source computing device and generating the error log including the estimated channel state in response to determining that the request is received. In some embodiments, the multimedia content may be surround sound audio data, the source computing device may be a media player, and the sink computing device may be a speaker. In some embodiment, the wireless network may be a Wi-Fi Miracast® network.

In some embodiments, the method may further include the sink computing device determining whether the estimated channel state satisfies an error threshold value and generating the error log including the estimated channel state in response to determining that the estimated channel state satisfies the error threshold. In some embodiments, the method may further include the sink computing device discontinuing playback of the multimedia content of the received multicast data stream in response to determining that the estimated channel state satisfies the error threshold. In some embodiments, the estimated channel state may be a packet loss rate and the error threshold may be a maximum packet loss rate.

In some embodiments, the operations of estimating a channel state, determining whether the estimated channel state satisfies an error threshold value, and generating an error log may be performed in one or more hardware modules.

Further embodiments include a sink computing device including a processor configured with processor-executable instructions to perform operations of the embodiment methods described above. Further embodiments include a non-transitory processor-readable storage medium having stored thereon processor-executable instructions configured to cause a processor to perform operations of the embodiment methods described above. Further embodiments include a sink computing device that includes means for performing functions of the operations of the embodiment methods described above.

### BRIEF DESCRIPTION OF THE DRAWINGS

The accompanying drawings, which are incorporated herein and constitute part of this specification, illustrate exemplary embodiments of the claims, and together with the general description given above and the detailed description given below, serve to explain the features of the claims.
FIGS. 1 is a system block diagram of a wireless media delivery platform or system suitable for use with the various embodiments.
FIG. 2 is a call flow diagram illustrating messages exchanged between a source computing device and sink computing device to establish a centralized-application-layer-multicast (ALM) group according to an embodiment.
FIG. 3 is a data structure diagram illustrating the ALM socket interface in a WiFi Miracast® protocol stack according to an embodiment.
FIG. 4 is a data structure diagram illustrating a WiFi Miracast® protocol stack with ALM according to an embodiment.
FIG. 5 is a process flow diagram illustrating an embodiment method for application level channel quality estimation.
FIG. 6 is a process flow diagram illustrating an embodiment method for adaptive unicast repeat/retransmission for group-based channel-error correction.
FIG. 7 is a call flow diagram illustrating messages exchanged between a source computing device and a sink computing device for group-based channel-quality interrogation.
FIG. 8A is a process flow diagram illustrating an embodiment method for generating and sending an error log.
FIG. 8B is a block diagram illustrating an embodiment sink computing device that implements the embodiment method of FIG. 8A.
FIGs. 9A and 9B are process flow diagrams illustrating an embodiment method for scalable data service distribution in WiFi Miracast®.
FIG. 10 is a component block diagram of a mobile computing device suitable for use in various embodiments.
FIG. 11 is a component block diagram of a speaker unit suitable for use in various embodiments.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the claims.

The word "exemplary" is used herein to mean "serving as an example, instance, or illustration." Any implementation described herein as "exemplary" is not necessarily to be construed as preferred or advantageous over other implementations.

The term "computing device" is used herein to refer to any one or all of cellular telephones, smart-phones, web-pads, tablet computers, Internet enabled cellular telephones, WiFi enabled electronic devices, personal data assistants (PDA's), laptop computers, personal computers, speakers, home theater receiver, set-top boxes, televisions, media players, printers, headrest mounted video displays, cameras, printers, wearable devices, and similar electronic devices equipped with at least a processor. In various embodiments, such computing devices may be further configured with a transceiver (e.g., an LTE, 3G, 4G, Bluetooth, WiFi, etc., wireless network transceiver) to establish wireless connections, such as via a wide area network (WAN) or local area network (LAN).

In various embodiments, computing devices in a wireless network, such as WiFi Miracast® network, may be categorized as sources and/or sinks depending upon whether they are transmitting or receiving content data. Sources may be computing devices that send content frames or packets to one or more other computing devices (i.e., sink devices), for example operating as a server providing frames or packets to other computing devices in the wireless network. Sinks may be computing devices that receive content frames or packets from one or more other computing devices. Computing devices may be exclusively operate as sources, exclusively operate as sinks, and/or operate as both a sink and a source in a wireless network, such as a WiFi Miracast® network. As an example, an in-home surround sound theater system may be implemented in a WiFi Miracast® network including a home theater receiver acting as a source wirelessly providing multi-channel-audio, such as high definition 7.1 surround sound, to a series of speakers acting as sinks. As another example, a WiFi Miracast® network may include a smartphone acting as a source wirelessly projecting streaming MPEG format imagery onto one or more nearby connected monitors acting as one or more sources.

Various examples of different wireless connections, wireless networks, and wireless media delivery platforms, are discussed herein, specifically WiFi Miracast® connections, networks, and media delivery platforms. The discussions of WiFi Miracast® are provided merely as examples to better illustrate the aspects of the various embodiments, and are not intended to limit the claims to WiFi Miracast® unless specifically recited. Other wireless connections, wireless networks, and wireless media delivery platforms (e.g., Apple AirPlay®, Wi-Di, etc.) may use or be used with the various embodiments, and other wireless connections, wireless networks, and wireless media delivery platforms may be substituted in the various examples discussed herein.

In an embodiment, a source computing device (e.g., a mobile phone or tablet) with multiple structured-peer-to-peer (P2P) connections in WiFi Miracast®, may self-organize an application dependent and application controlled one-hop fault-tolerant centralized-application-layer-multicast (ALM) group for scalable distribution of multimedia data to a group of sink computing devices. For example, a centralized ALM group of WiFi Miracast® sink computing devices may cooperatively form a virtual overlay network for directly receiving multicast payload delivered on the overlay from the source computing device. Based on the application distribution model, multiple WiFi Miracast® sink computing devices may be grouped for simultaneously receiving application data from a socket in WiFi Miracast®. In an embodiment, centralized ALM may be implemented with the multicast socket interface in the source computing device directly soliciting and communicating with socket objects in peer clients of sink computing devices to proactively organize a multicast group. Core socket object services may include open connection, accept connection, send data, and receive data. Service management may be supported over centralized ALM using the service discovery framework.

In an embodiment, a processor of a source computing device in a WiFi Miracast® network may group all sink computing devices scheduled to receive a frame or packet of a service into a single multicast group, and transmit a multicast frame or packet to the sink computing devices. In an embodiment, the multicast frame or packet may include an indication directing any receiving sink computing device to generate and send an error log (or any other type indication of channel statistics) back to the source computing device. The source computing device may collect incoming error logs and, based on the receipt and/or lack of receipt of error logs, determine whether or not a specific sink computing device received the multicast frame or packet. In an embodiment, any sink computing devices determined by the processor of the source computing device to have not received the multicast frame or packet may be moved to a unicast group, and the multicast frame or packet may be retransmitted directly to each respective sink computing device in the unicast group via unicast transmissions. While ideally all sink computing devices may receive the multicast frame or packet via the original multicast transmission eliminating any need for unicast retransmission, at least a portion of the sink computing devices in the single multicast group are likely to receive the multicast frame or packet via the original multicast transmission reducing the need for unicast transmissions in comparison to sending all member sink computing devices the frame or packet via separate unicast transmissions. Adaptive unicast retransmission may be used to reach each of the subset of sink computing devices that did not receive the original multicast transmission. In this manner, less bandwidth may be dedicated to unicast transmissions because unicast transmission of the frame or packet may be avoid for those sink computing devices in the single multicast group that received the original transmission.

In some embodiments, retransmission of frames or packets may include unsetting a flag associated with previously transmitted frames or packets buffered in a memory of the source computing device such that the un-flagged frames or packets may again be identified by the processor of the source computing device as un-transmitted. This may cause the processor of the source computing device to retransmit the un-flagged frames or packets from the buffer.

In a further embodiment, the processor of the source computing device may determine whether a time for transmission of a next frame or packet is reached. For example, each frame or packet may be associated with a transmission time, and based on the clock time at the source computing device the processor of the source computing device may determine whether a time for transmission of a next frame or packet has been reached. In response to determining that the time for transmission of the next frame or packet is not reached, the processor of the source computing device may retransmit the previous frame or packet directly to each respective sink computing device in the unicast group via unicast transmissions. In response to determining that the time for transmission of the next frame or packet is reached, the processor of the source computing device may send the next frame or packet without retransmitting the previous frame or packet. In this manner, when the transmission window for a frame or packet has closed as indicated by the time for transmission of the next frame or packet being reached, the processor of the source computing device may avoid expending resources on retransmission and proceed directly to sending the next frame or packet to the respective sink computing devices in the multicast group via multicast transmissions and to each respective sink computing device in the unicast group via unicast transmissions.

In an embodiment, a request for an error log (or any other type indication of channel statistics) may be sent from a source computing device by a message separate from the multicast frame or packet, such as by control plane messages. For example, WiFi Miracast® may use real time streaming protocol (RTSP) signaling for sending messages to request error logs associated with the multicast transmission. In an embodiment, the source computing device may send the request for generating and sending an error log (or any other type indication of channel statistics) to the sink computing devices by using any control message, such as a RTSP SET_PARAMETER request. In an embodiment, requests for error logs may also be sent from the source computing device to the sink computing devices through the service discovery framework.

In the various embodiments, the request for an error log (or any other type indication of channel statistics) may be a request for a one time transmission of an error log by the sink computing device or the request may be a request for periodic transmissions of successive error logs by the sink computing device. For example, the request for an error log sent from the source computing device may indicate that the sink computing device should generate and send a single error log. As another example, the request for an error log sent from the source computing device may indicate that the sink computing device should generate and send error logs at a specified period (e.g. at least every 50 ms).

In an embodiment, individual sink computing devices in a WiFi Miracast® network may be configured to monitor and determine the quality of their respective wireless connections with a source computing device. In an embodiment, a processor of a sink computing device may monitor one or more data elements included in multimedia content frames or packets, such as MPEG frames or packets, as the frames or packets are received. The data elements may include time and/or sequence information corresponding to the multimedia content. Based on the data elements in the frames or packets, the processor of the sink computing device may make channel state estimations, such as a frame or packet loss rate, to determine the quality of the wireless connection between the source computing device and the sink computing device. Examples of time and sequence information may include a program clock reference (PCR) and a continuity counter (CC) of an MPEG transport stream containing the multimedia content. Another example may include a sequence number (SEQ NUM) of a Real-time Transport Protocol (RTP) containing the MPEG transport stream.

In an embodiment, the processor of the sink computing device may compare the MPEG program clock references (PCRs) indicated in two or more successively received frames or packets to calculate the PCR skip or miss rate. In an embodiment, a PCR skip or miss rate above a threshold value stored in a memory of the sink computing device may indicate that a PCR error has occurred. In an embodiment, the PCR skip or miss rate and/or the indication of a PCR error occurring may be used by the processor of the sink computing device to make a channel quality (or channel state) estimation, such as a packet loss rate.

In an embodiment, the processor of a sink computing device may compare the MPEG continuity counter (CCs) indicated in two or more successively received frames or packets to calculate the continuity counter skip or miss rate (i.e., the rate at which one or more frames in a sequence are not received). In an embodiment, a continuity counter skip or miss rate above a threshold value stored in a memory of the sink computing device may indicate that a continuity counter error has occurred. In an embodiment, the continuity counter skip or miss rate and/or the indication of a continuity counter error occurring may be used by the processor of the sink computing device to make a channel state estimation, such as a packet loss rate.

In an embodiment, the processor of the sink computing device may compare RTP sequence numbers (SEQ NUMs) indicated in two or more successively received frames or packets to calculate the RTP SEQ_NUM skip or miss rate. In an embodiment, a RTP SEQ NUM skip or miss rate above a threshold value stored in a memory of the sink computing device may indicate that a RTP SEQ error has occurred. In an embodiment, the RTP SEQ NUM skip or miss rate and/or the indication of a RTP SEQ error occurring may be used by the processor of the sink computing device to make a channel state estimation, such as a packet loss rate.

In a further embodiment, various combinations of two or more of a PCR skip or miss rate and/or an indication of a PCR error occurring, a continuity counter skip or miss rate and/or an indication of a continuity counter error occurring, and a RTP SEQ NUM skip or miss rate and/or an indication of a RTP SEQ error occurring may be used together by the processor of a sink computing device to make a channel state estimation, such as a packet loss rate.

In an embodiment, a sink computing device may compare a channel state estimation, such as a packet loss rate, to a threshold stored in a memory and in response to the channel state estimation exceeding the threshold may generate an error log (e.g., a CQE log) or any other type indication of channel statistics. In an embodiment, the error log may indicate that the channel state estimation, such as the packet loss rate. In a further embodiment, the error log may include other metrics related to the sink computing device, such as an application performance estimation (e.g., a QoS estimate, QoE estimate, etc.). In an embodiment, the sink computing device may generate an error log (e.g., a CQE log) in response to a request for an error log from a source device, such as an error log request indicated in a frame or packet sent to the sink computing device from the source computing device. In various embodiments, in response to the channel state estimation exceeding the threshold, such as the packet loss rate exceeding a packet loss threshold stored in memory, and/or in response to a request for an error log from a source device, a sink computing device may send a generated error log (e.g., a CQE log) to the source computing device. In an embodiment, the error log may be sent from the sink device to the source computing device in a unicast transmission over a separate wireless uplink channel.

In an embodiment, a source computing device may add multicast group member sink computing devices to a unicast group based at least in part on information contained within error logs received from the multicast group member sink computing devices, as well as on the absence of an error log from a member of the multicast group (i.e., missing error logs). For example, in response to determining that an error log has not been received by the source computing device from a particular sink computing device that is a member of the multicast group, the source computing device may add that computing device to the unicast group or list on the presumption that the computing device is not receiving the multicast transmissions. As another example, in response to receiving an error log indicating channel performance for a multicast group member sink computing device is below an acceptable level, the source computing may add that multicast group member sink computing device to the unicast group or list to ensure reliable delivery of the content data.

In various embodiments, after transmitting a frame or packet via multicast transmission to the multicast group member sink computing devices, the source computing device may retransmit the same frame or packet via unicast to sink computing devices also in the unicast group or on the unicast list. In this manner, the source computing device may attempt transmission to the unicast group members twice, first via the multicast transmission of the frame or packet, and second via the unicast transmission to each unicast group member. In an embodiment, the source computing device may check the available bandwidth on the current channel, and the unicast retransmission to the unicast group members may occur in response to the available bandwidth being high enough to support the needed unicast transmissions. In response to the bandwidth not being high enough, the source computing device may release the channel.

In an embodiment, sink computing devices may be removed from the unicast group or list in response to their respective error logs received by the source computing device indicating that the channel performance for that sink computing device has achieved an acceptable level. In this manner, sink computing devices may be removed from the unicast group when they are receiving the service reliability from the multicast transmissions, thereby reducing the demands on the unicast bandwidth because further frames or packets will not be retransmitted via unicast to such sink computing devices.

In an embodiment, the source computing device may determine whether the channel state is acceptable based on one or more received error logs. In response to the channel state not being acceptable, the source computing device may release the channel and/or downgrade the service. In this manner, resources may not be wasted on attempted retransmission via unicast when the channel cannot support multicast. For example, in response to determining that the channel state is not acceptable, the source computing device may downgrade the service from a 7.1 surround sound service to a 5.1 surround sound service.

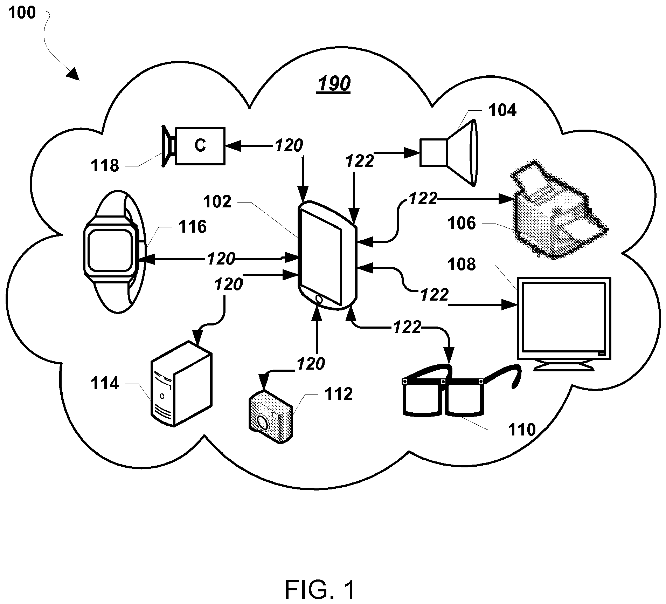

FIG. 1 illustrates an example of wireless media delivery platform or system 100, such as WiFi Miracast® platform or system, that includes various computing devices 102-118 connected to a WiFi LAN 190 and/or capable of utilizing WiFi communications. In this system 100, the computing devices may exchange data with one another, such as frames or packets, messages, logs, etc. via wireless connections 120 and/or 122. For example, a smartphone 102 may receive MPEG streams via wireless connections 120 (e.g., WiFi connections over the LAN 190, etc.) from a video camera 118 (e.g., an Internet or web cam, etc.), a wearable device 116 (e.g., a smart watch, etc.), a personal or desktop computer 114, and/or a digital camera 112. In such examples, the video camera 118, wearable device 116, personal or desktop computer 114, and/or the digital camera 112 may operate as source computing devices providing frames or packets to the smartphone 102 operating as a sink computing device. The smartphone 102 operating as the sink computing device may provide messages, such as acknowledgement messages, and/or logs, such as error logs (or any other type indication of channel statistics), to the video camera 118, wearable device 116, personal or desktop computer 114, and/or the digital camera 112 operating as source computing devices.

As further examples, the smartphone 102 may transmit MPEG streams via wireless connections 122 (e.g., WiFi connections over the LAN 190, etc.) to a speaker device 104, a printer device 106, a monitor device 108, and/or a head-mounted display (HMD) device 110. With such one-to-many capabilities, WiFi Miracast® and similar wireless media delivery platforms may provide inter-device connectivity that enables an entire service to be possible via a plurality of devices. For example, to render a movie, the smartphone 102 may provide a video MPEG stream to the head-mounted display device 110 and an audio MPEG stream to the speaker device 104. In such examples, the smartphone 102 may operate as a source computing device providing frames or packets to the speaker device 104, the printer device 106, the monitor device 108, and/or the HMD device 110 operating as sink computing devices. The speaker device 104, the printer device 106, the monitor device 108, and/or the HMD device 110 operating as the sink computing devices may provide messages, such as acknowledgement messages, and/or logs, such as error logs (or any other type indication of channel statistics), to the smartphone 102 operating as a source computing device.

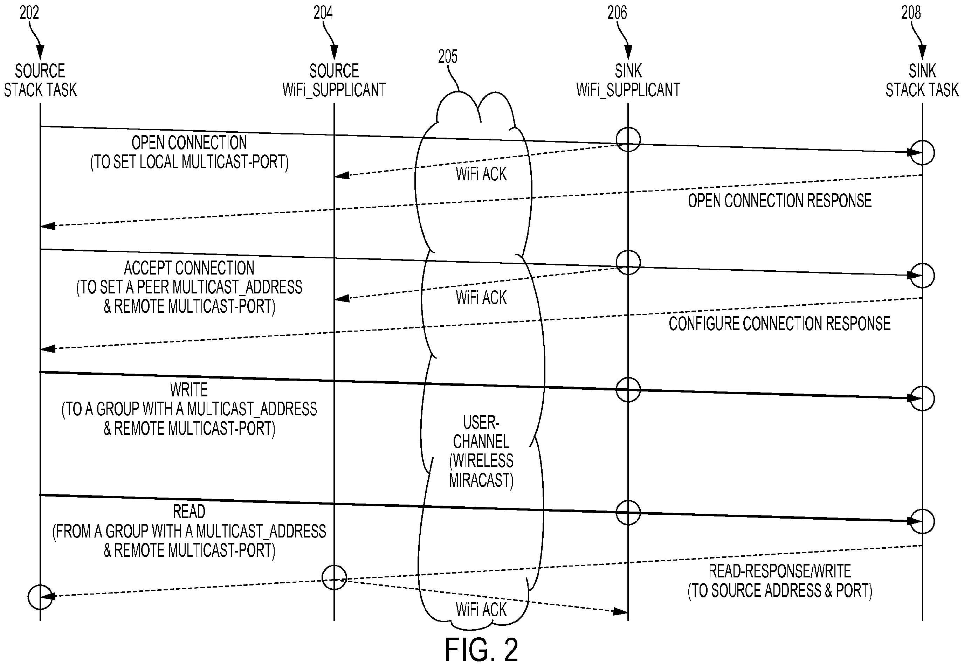

FIG. 2 is a call flow diagram illustrating messages exchanged between a source computing device and sink computing device to establish a centralized-ALM group according to an embodiment. FIG. 2 illustrates messages sent between the source stack task layer 202 and the source WiFi layer 204 (e.g., supplicant layer and/or MAC layer, etc.) running on a processor of a source computing device and the sink WiFi layer 206 (e.g., supplicant layer and/or MAC layer, etc.) and sink stack task layer 208 running on the processor of a sink computing device via the user channel 205, such as a wireless WiFi Miracast® channel. In an embodiment, centralized ALM may be implemented with multicast socket interface in host Mobil-PH/Pad peer Server for directly soliciting and communicating with many socket objects in corresponding peer clients to proactively organize the multicast group. Accordingly, core socket object services may include open connection, accept connection, send data, and receive data. Service management may be supported over centralized ALM using the service discovery framework.

As illustrated in FIG. 2, WiFi acknowledgements are exchanges between the sink WiFi layer 206 and source WiFi MAC layer 204 (e.g., between the WiFi MAC layers) over the user channel 205 when open connection and accept connection messages are received by the sink computing device. Additionally, the source stack task layer 202 of the source computing device may send multicast channel-status-estimate inquires (e.g., requests for error logs) to sink computing devices of the multicast group via write and/or read messages to the remote multicast-port. The sink stack task layer 208 of the sink computing device may respond with a read-response/write message (e.g., the requested error log) sent to the source address and port via the user channel 205.

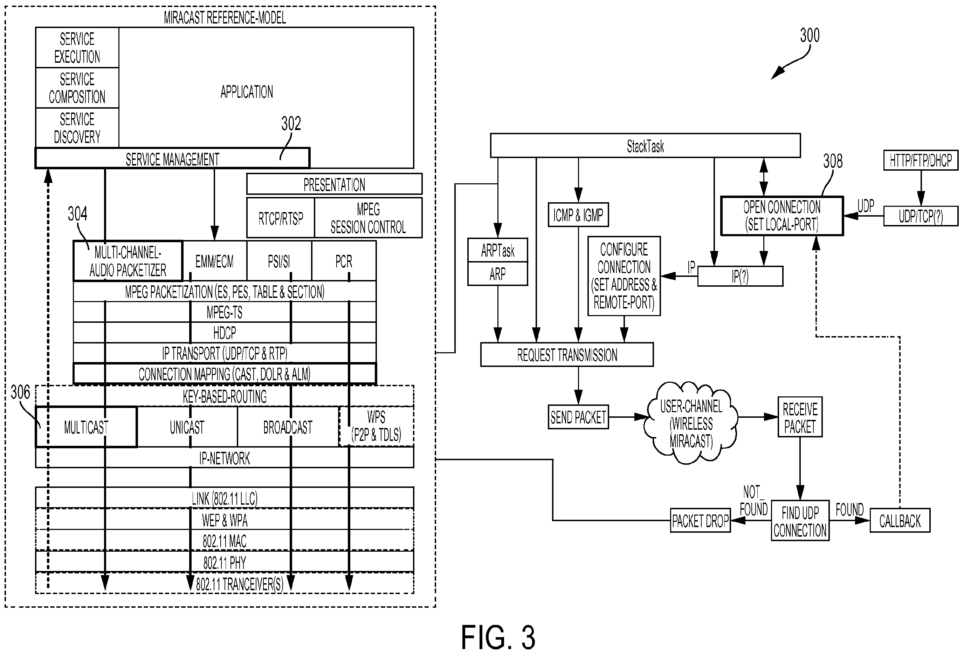

FIG. 3 is a data structure diagram illustrating the ALM socket interface in a WiFi Miracast® protocol stack 300 according to an embodiment. As indicated by the various arrows flowing to and from the service management module 302 of the application layer, application session and access control management messages may be unicast or broadcast as needed. In an embodiment, wireless channel transmission may be distributed as multicast from the service management module 302 through the multi-channel-audio packetizer module 304 and the multicast routing module 306. Additionally, connection mapping for the multicast transmission may be controlled by the open connection module 308 setting the local port for the source computing device such that sink computing devices may respond to multicast transmissions by addressing the set local port of the source computing device.

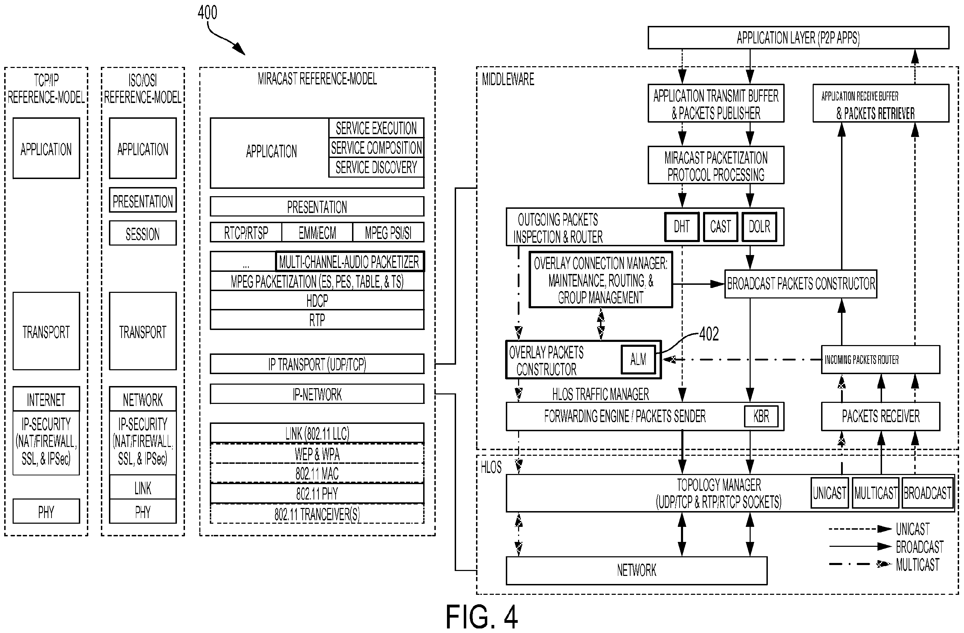

FIG. 4 is a data structure diagram illustrating a WiFi Miracast® protocol stack 400 with ALM according to an embodiment. In an embodiment, multiple sink computing devices may be grouped into a multicast group for receiving application data from a single source socket in WiFi Miracast®. As illustrated by the ball dashed multicast lines in FIG. 4, incoming multicast frames or packets from the packets receiver module and incoming packets router module may be routed to the ALM module 402 of the overlay packets constructor running on a processor of the sink computing device. Additionally, outgoing frames or packets from the outgoing packets inspection and router module may be routed to the ALM module 402 of the overlay packets constructor running on a processor of the sink computing device. In this manner, sink computing devices of the multicast group may use the multicast socket to both receive packets and reach the application server (e.g., via FEC nags) at the source computing device.

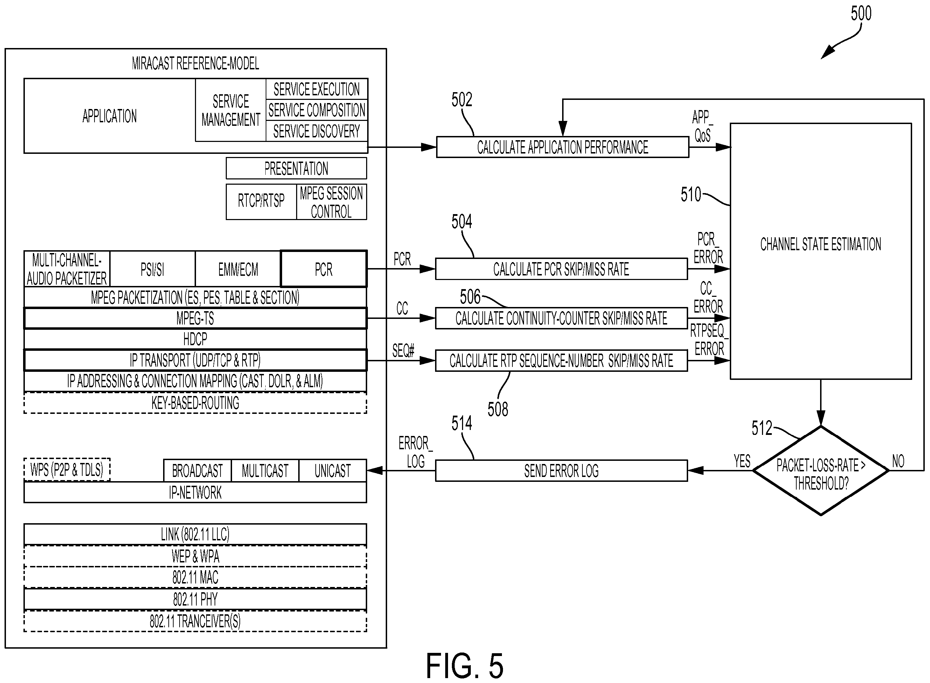

FIG. 5 is a process flow diagram illustrating an embodiment method 500 for application level channel state estimation. In an embodiment, the operations of method 500 may be performed by the processor of a sink computing device. In block 502 the processor of the sink computing device may calculate an application performance metric. In block 504 the processor of the sink computing device may calculate a PCR skip/miss rate. In block 506 the processor of the sink computing device may calculate a continuity-counter skip/miss rate. In block 508 the processor of the sink computing device may calculate a RTP sequence-number skip/miss rate. In block 510 the processor of the sink computing device may determine a channel state estimation based on one or more of the results of the calculations in blocks 502, 504, 506, and 508. For example, the channel state estimation may be a packet-loss-rate.

In determination block 512 the processor of the sink computing device may determine whether a packet-loss-rate is greater than a threshold. In response to determining that the packet loss rate is above the threshold (i.e., determination block 512 = "Yes"), the processor of the sink computing device may send the error log to the source computing device in a unicast transmission over a separate wireless uplink channel in block 514. In response to determining that the packet loss rate is not above the threshold (i.e., determination block 512 = "No"), the processor of the sink computing device may repeat operations of calculating performance metrics in blocks 502, 504, 506, and 508 in order to detect and adjust to changes in the wireless connection.

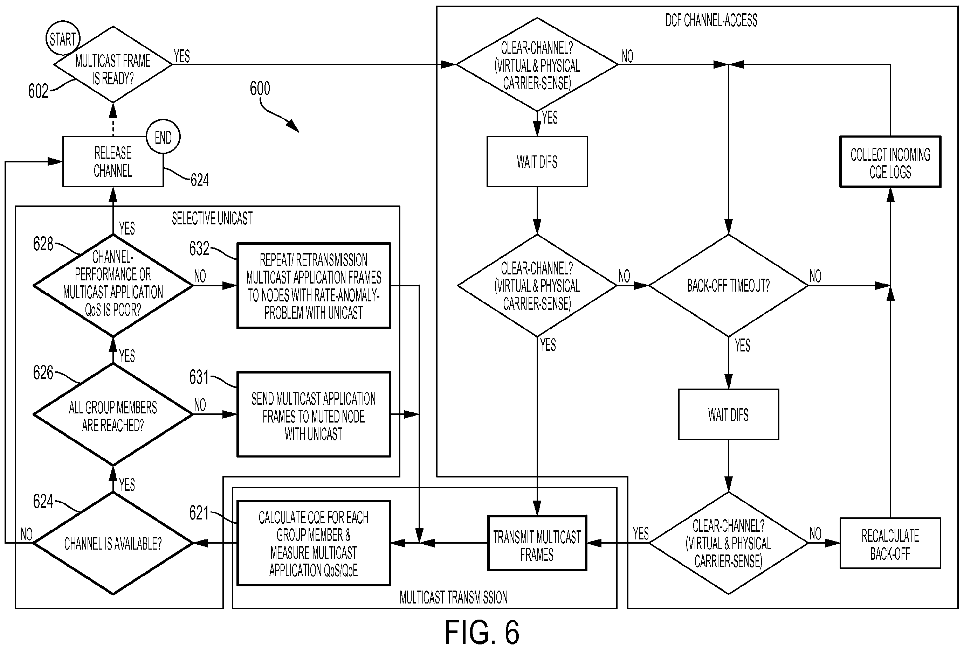

FIG. 6 is a process flow diagram illustrating an embodiment method for adaptive unicast repeat/retransmission for group-based channel-error correction. In an embodiment, the operations of method 600 may be performed by the processor of a source computing device. In determination block 602 the processor of the source computing device may determine whether a multicast frame is ready. In response to determining that a multicast frame is ready (i.e., determination block 602 = "Yes"), the processor of the source computing device may determine whether the channel is clear in determination block 604. In response to determining that the channel is clear (i.e., determination block 604 = "Yes"), the processor of the source computing device may wait the required interframe space (IFS) duration, such as distributed coordination function (DCF) interframe space (DIFS) duration in block 606, and determine whether the channel is clear in determination block 610. While the source computing device is described as waiting the required IFS duration which may be the DIFS, the DIFS is only one example IFS time, and the required IFS duration may be represent by one or more other time periods, such as the Arbitration inter-frame spacing (AIFS) access category (AC) AIFS[AC] duration.

In response to determining that the channel is not clear (i.e., determination block 604 = "No" or determination block 610 = "No"), the processor of the source computing device may determine whether a back-off period has timed out in determination block 612. In response to determine the back-off period has timed out (i.e., determination block 612 = "Yes"), the processor of the source computing device may wait for the DIFS duration in block 614, and determine whether the channel is clear in block 616. In response to determining the channel is not clear (i.e., determination block 616 = "No"), the processor of the source computing device may recalculate the back-off period in block 618.

Upon recalculating the back-off period in block 618 or in response to determining that the back-off period has not timed out (i.e., determination block 612 = "No"), the processor of the source computing device may collect incoming error logs (e.g. CQE logs) in block 608 and again determine whether a back-off period has timed out in determination block 612.

In response to determining that the channel is clear (i.e., determination blocks 610 or 616 = "Yes"), the processor of the source computing device may transmit the multicast frames in block 620. In block 621 the processor of the source computing device may calculate CQE for each group member and measure the multicast application QoS/QoE. In determination block 622 the processor of the source computing device may determine whether the channel is available based at least in part of the CQE for each group member and the multicast application QoS/QoE. In response to determining that the channel is not available (i.e., determination block 622 = "No"), the processor of the source computing device may release the channel in block 624.

In response to determining that the channel is available (i.e., determination block 622 = "Yes"), the processor of the source computing device may determine whether all group members are reached in determination block 626. For example, the processor of the source computing device may determine whether a CQE log was received from each group member and/or whether some type of acknowledgement message was received from each group member to determine whether each group member was reached. In response to determining that at least one group member was not reached (i.e., determination block 626 "No"), the processor of the source computing device may send the multicast application frames to the muted nodes (e.g., unreached sink computing devices) with unicast in block 630.

In response to determining that all group members are reached (i.e., determination block 626 = "Yes"), the processor of the source computing device may determine whether channel performance or multicast application QoS is poor in determination block 628. In response to determining that channel performance or multicast application QoS is poor (i.e., determination block 628 = "Yes"), the processor of the source computing device may release the channel in block 624. In response to determining that channel performance or multicast application QoS is not poor (i.e., determination block 628 = "No"), the processor of the source computing device may repeat/retransmit multicast application frames to nodes with rate-anomaly problems with unicast in block 632. The processor may perform the operations of the method 602 in a loop by determining whether the next multicast frame is ready in block 602.

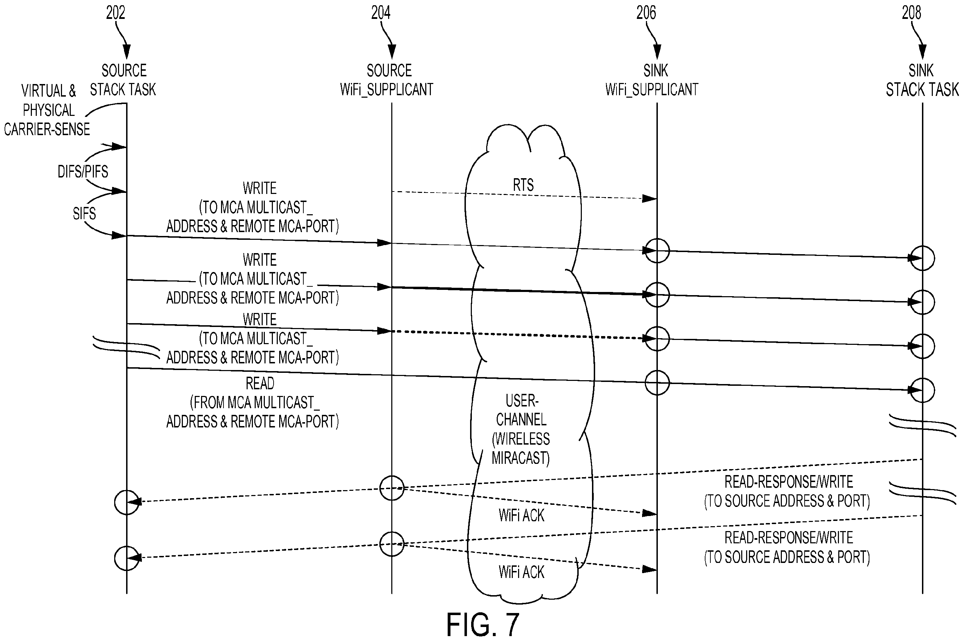

FIG. 7 is a call flow diagram illustrating messages exchanged between a source computing device and a sink computing device for group-based channel-quality interrogation. FIG. 7 is similar to FIG. 2 described above in that it shows further exchanges between the layers 202, 204, 206, and 208 across the user channel 205 discussed above. FIG. 7 illustrates how multicast may be used to query all group members about their respective CQE and/or application QoS/QoE. In an embodiment, nodes (e.g., sink computing devices) that are unresponsive to health interrogations or those nodes reporting poor link performance may be listed for unicast retransmission.

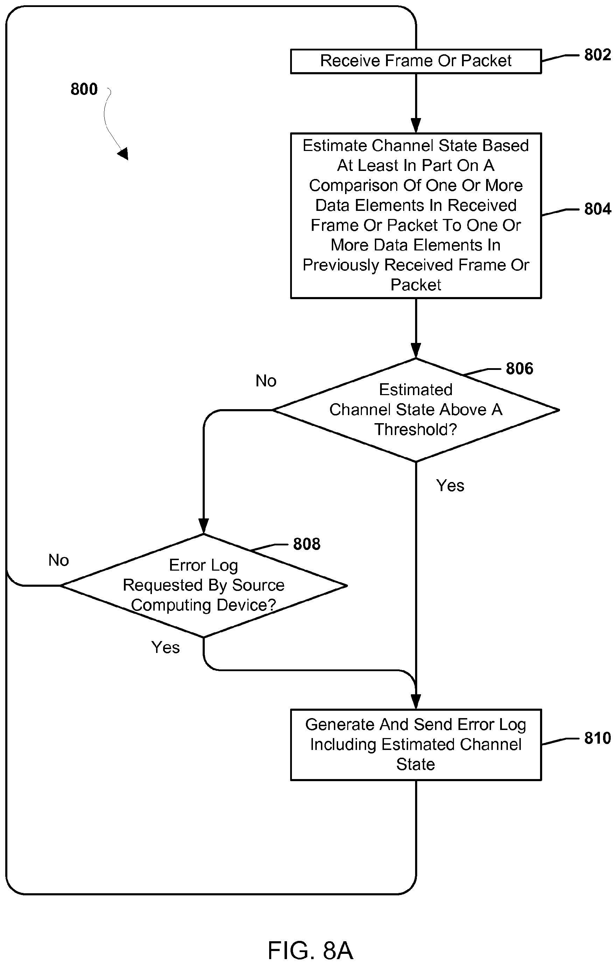

FIG. 8A is a process flow diagram illustrating an embodiment method 800 for generating and sending an error log. In an embodiment, the operations of method 800 may be performed by the processor of a sink computing device. In block 802 the processor of the sink computing device may receive a frame or packet. For example, the frame or packet may be a frame or packet received via a multicast transmission from a source computing device and/or a unicast transmission from a source computing device.

In block 804 the processor of the sink computing device may estimate a channel state based at least in part on a comparison of one or more data elements in the received frame or packet to one or more data elements in a previously received frame or packet. In an embodiment, the processor of a sink computing device may monitor content frames or packets, such as MPEG frames or packets as the frames or packets are received. Based on the data elements in the frames or packets, such as RTP SEQ NUM, MPEG-TS, and PCR, the processor of the sink computing device may estimate the channel state by comparing the currently received frame or packet to a previously received frame or packet. In an embodiment, the processor of the sink computing device may compare the program clock references (PCRs) indicated in two or more successively received frames or packets to calculate the PCR skip or miss rate. In an embodiment, a PCR skip or miss rate above a threshold value stored in a memory of the sink computing device may indicate that a PCR error has occurred. In an embodiment, the PCR skip or miss rate and/or the indication of a PCR error occurring may be used by the processor of the sink computing device to estimate the channel state, such as a packet loss rate for the channel. In an embodiment, the processor of the sink computing device may compare the MPEG-time stamps (TSs) and continuity counter (CCs) indicated in two or more successively received frames or packets to calculate the continuity counter skip or miss rate. In an embodiment, a continuity counter skip or miss rate above a threshold value stored in a memory of the sink computing device may indicate that a continuity counter error has occurred. In an embodiment, the continuity counter skip or miss rate and/or the indication of a continuity counter error occurring may be used by the processor of the sink computing device to estimate the channel state, such as a packet loss rate for the channel. In an embodiment, the processor of the sink computing device may compare the Real-time Transport Protocol (RTP) sequence numbers (SEQ NUMs) indicated in two or more successively received frames or packets to calculate the RTP SEQ_NUM skip or miss rate. In an embodiment, a RTP SEQ_NUM skip or miss rate above a threshold value stored in a memory of the sink computing device may indicate that a RTP SEQ error has occurred. In an embodiment, the RTP SEQ NUM skip or miss rate and/or the indication of a RTP SEQ error occurring may be used by the processor of the sink computing device to estimate the channel state, such as a packet loss rate for the channel. In a further embodiment, various combinations of two or more of a PCR skip or miss rate and/or an indication of a PCR error occurring, a continuity counter skip or miss rate and/or an indication of a continuity counter error occurring, and a RTP SEQ NUM skip or miss rate and/or an indication of a RTP SEQ error occurring may be used together by the processor of a sink computing device to estimate the channel state, such as packet loss rate for the channel.

In determination block 806 the processor of the sink computing device may determine whether the estimated channel state is above a threshold. For example, the processor of the sink computing device may compare the estimated channel state to a threshold stored in memory. As a specific example, the processor of the sink computing device may compare the estimated packet loss rate to a maximum packet loss rate stored in memory. In response to determining that the estimated channel state is at or below the threshold (i.e., determination block 806 = "No"), the processor of the sink computing device may determine whether an error log is requested by the source computing device in determination block 808. For example, the processor of the sink computing device may determine whether an error log request indication was included in the received frame or packet from the source computing device.

In response to determining that an error log is not requested (i.e., determination block 808 = "No"), the processor of the sink computing device may receive the next frame or packet in block 802.

In response to determining that an error log is requested by the source computing device (i.e., determination block 808 = "Yes") or that the estimated channel state is above the threshold (i.e., determination block 806 = "Yes"), the processor of the sink computing device may generate and send an error log including the estimated channel state in block 810. For example, the error log may be a CQE log sent via unicast to the source computing device. The processor may repeat the method 800 by receiving the next frame or packet in block 802.

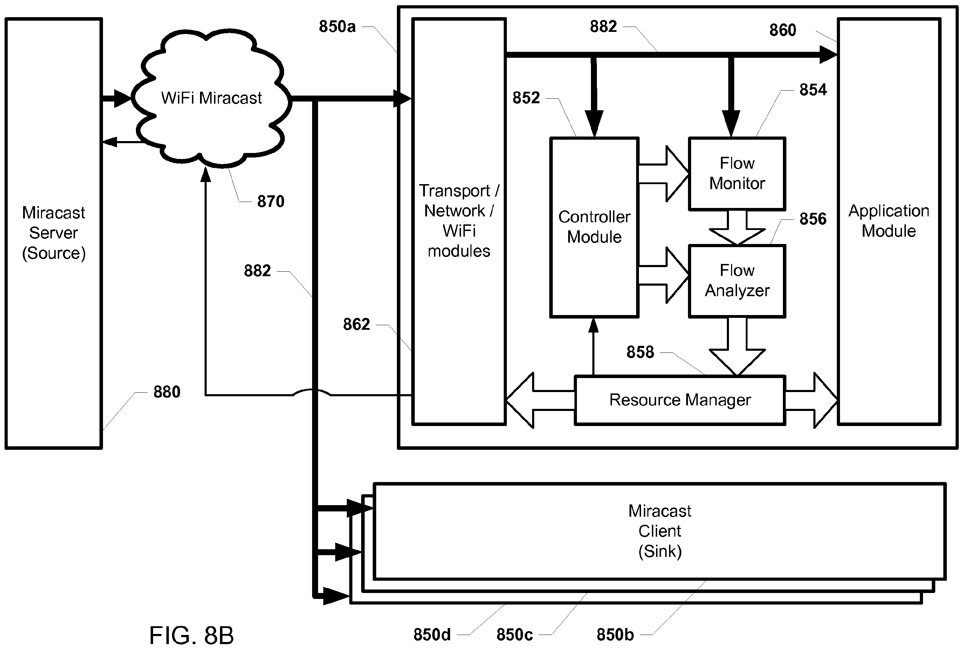

FIG. 8B is a block diagram illustrating an embodiment sink computing device 850a that implements the embodiment method 800 of FIG. 8A. Each of the embodiment sink computing devices 850a, 850b, 850c, and 850d (collectively 850) may be a WiFi Miracast® client device that communicates with a source computing device 880 (e.g., WiFi Miracast® server device 880) over a wireless network 870 (e.g., a WiFi Miracast®).

In an embodiment, the source computing device 880 may multicast multimedia or other real-time content to the WiFi Miracast® client devices 850 over a wireless multicast channel, and the sink computing devices may communicate error logs or other indications of the wireless multicast channel quality or state back to the source computing device 880. The error logs may be communicated periodically (e.g., at least every 50 ms), in response to meeting an error threshold, or upon demand by the source computing device 880. As an example, a WiFi Miracast® server device may implement a media player and WiFi Miracast® client devices may implement various audio speaker components of a multi-channel surround sound system.

An embodiment sink computing device 850a may include a controller module 852, a flow monitor 854, a flow analyzer 856, and a resource manager 858. The functionality of the controller module 852, the flow monitor 854, and the flow analyzer 856 may be implemented in hardware as circuitry or circuit modules for improved real-time processing.

The sink computing device 850a may also include one or more application modules 860 and one or more communication modules 862. The application module 860 may implement a multimedia or other real-time application demanding low-latency access to data. For example, the application module 860 may implement a multimedia application that outputs audio, video or both audio and video. The one or more communication modules 862 may implement a set of communication protocols for communicating over a wireless network 870. For example, the communication modules 862 may implement a set of transport, network, and physical layer communication protocols to communicate over a WiFi Miracast® network. The one or more application modules 860 and the one or more communication modules 862 may be implemented in hardware as circuitry or circuit modules or as software modules executing on a processor.

In operation, the sink computing devices 850 that are members of a multicast group receive a multicast data stream 882 from the source computing device 880 over the wireless network 870. The multicast data stream 882 may carry multimedia or other real-time content for playback or other output presentation by the sink computing devices 850. For example, a set of WiFi Miracast® audio speakers (an example of sink computing devices 850) may receive a multicast data stream of multi-channel audio data from a WiFi Miracast® surround sound media player. The media player may be fixed computing device (e.g., a set top box), or mobile computing device (e.g., portable music player).

The sink computing device 850a may communicate the received multicast data stream 882 through the one or more communication modules 862 for processing according to the various physical, network, and transport layer protocols. For example, the communication modules 862 may include a WiFi physical layer module, an Internet Protocol (IP) network module, and a User Datagram Protocol (UDP) transport module. The multicast data stream 882 may be further communicated over a bus or other hardware interface to the application module 860 in which application layer specific processing is performed on the multimedia or real-time content. For example, the application module 860 of a WiFi Miracast® audio speaker may control the decoding and playback of the multi-channel audio data for a specific audio channel (e.g., front left, center, front right, surround left, surround back, surround right, subwoofer).

The multicast data stream 882 communicated between the communication modules 862 to the application module 860 may be segmented into packets, frames or other units. For example, the multicast data stream 882 may be segmented into packets formatted according to certain application layer protocols, e.g., Real-time Transport Protocol (RTP). Each RTP packet may include an RTP header and payload. The header of RTP packet may include data elements that represent certain application layer (or application-specific) time and/or sequence information, including a sequence number (RTP_SEQ_NUM) that is incremented for each RTP packet. The payload of an RTP packet may carry multimedia or other real-time content or may include one or more subpackets. For example, in some embodiments, the payload of an RTP packet may include an MPEG-2 transport stream (TS) packet that carries the elementary streams of audio and/or video data. The header of an MPEG-2 TS packet may also include data elements that represent application layer (or application-specific) time and/or sequence information.

In the case of multimedia or other real-time content, it may be preferable that the application module 850 receives the multicast data stream well, e.g., with minimal packet loss. If one or more of the sink computing devices 850 are missing or skipping packets (i.e., not all packets are being received and decoded), the corresponding playback or output may be negatively impacted. In order to determine how well a client device 850 is receiving the multicast data, each of the sink computing devices 850 may be configured to monitor and analyze certain application layer data elements (e.g., time and/or sequence information) of the received packets in the multicast data stream 882 and communicate the results of such analysis in the form of error logs or other indications of wireless channel quality back to the source computing device 880 for remedial action as necessary.

In some embodiments, the controller module 852 may be configured with information from the source computing device 880 for detecting and monitoring packets of the received multicast data stream 882. For example, the controller module 852 may be configured with a destination socket identifier that may include a multicast address and port number. The controller module 852 may be further configured with a packet identifier for identifying one of the elementary streams (e.g., audio, video, etc.) that may be multiplexed within the multicast data stream 882. The source computing device 880 may communicate such configuration information to each sink computing device 850 in a separate multicast or unicast message that is received and used by the resource manager 858 to configure the controller module 852 for detecting packets of the received multicast stream.

As packets of the multicast data stream 882 are communicated from the communication modules 862 to the application module 860, the controller module 852 may use the configured socket identifier and/or packet identifier to detect packets corresponding to the multicast data stream 882 that is being monitored. Each time a packet of the multicast data stream 882 is detected, the controller module 852 may send an interrupt or other alert to the flow monitor 854 indicating the presence of a detected packet.

The flow monitor 854 may be configured to monitor one or more data elements contained in a detected packet. In an embodiment, the one or more data elements may include time or sequence information corresponding to multimedia content carried in the packet. For example, in implementations in which the packet is a RTP packet, the flow monitor 854 may be configured to read or extract the value of sequence number (RTP_SEQ_NUM) in the header of the RTP packet. As another example, the payload of a RTP may further include an MPEG-2 transport stream (TS) packet, and, therefore, the flow monitor 854 may be configured to read or extract the value of a program clock reference (PCR) and/or continuity counter (CC) in the MPEG-2 TS packet.

The flow monitor 854 may be further configured to compare the monitored data elements in a detected packet with data elements in a previously received packet. In response to determining that the value of a monitored data element in a detected packet is different than an expected value, the flow monitor may determine that a reception error has occurred. For example, the sequence number (RTP_SEQ_NUM) in the header of a RTP packet is incremented by one for each RTP data packet. Therefore, in response to determining that the difference in the sequence numbers of consecutive RTP packets is greater than one, the flow monitor 854 may determine that a RTP SEQ NUM error exists. A RTP_SEQ_NUM error is generally indicative of one or more lost (i.e., not received) RTP packets. Likewise, the values of the program clock reference (PCR) and continuity counter (CC) of MPEG-2 TS packets are also expected to increment at certain rates and intervals. Therefore, in response to determining that actual interval between two consecutively received PCR values is different than an expected interval (e.g., once every 100 milliseconds), a program clock reference (PCR) error may be detected. Similarly, a continuity counter (CC) error may be detected in response to determining that the difference between the values of consecutively monitored continuity counters (CC) is greater than one.

The flow monitor 854 may be configured to communicate a reception error and additional related metadata to the flow analyzer 856 in response to determining that a reception error exists (e.g., an RTP_SEQ_NUM PCR, and/or a CC error). The flow analyzer 856 may be configured to maintain a record of the various reception errors and track the rate of such errors over time (e.g., RTP_SEQ NUM, PCR, and/or CC skipped/missing error rates). The flow analyzer 856 may be further configured to calculate an estimate of the state or quality of the wireless channel based on one or more of reception error rates. In an embodiment, the estimated channel state may be a packet loss rate. For example, the estimation of a packet loss rate may be based on the one or more of the RTP_SEQ_NUM, PCR, and/or CC skipped/missing error rates.

The flow analyzer 854 may be also be configured to compare the estimated channel state, such as a packet loss rate, against an error threshold, such as a maximum packet loss rate. In response to determining that the estimated channel state of the wireless channel meets or exceeds the error threshold, the flow analyzer 854 may communicate the estimated channel state in the form of an alert or an interrupt to the resource manager 858. In response to the alert, the resource manager 858 may generate and transmit an error log that includes the estimated channel state back to the source computing device 880. In some embodiments, the resource manager 858 may send the error log to the source computing device 880 immediately after the log is generated. In other embodiments in which the sink computing devices 850 are configured to transmit the error log at predetermined times (e.g., every 50 ms) or upon demand by the source computing device 880, the resource manager 858 may generate an error log that includes multiple time-stamped entries of the estimated channel states aggregated over time. The resource manager 858 of a sink computing device 850 may transmit the error log in a unicast message back to the source computing device 880 over a separate WiFi Miracast® channel connection.

In some embodiments, the resource manager 858 may also be configured to communicate the alert, with or without the estimated channel state, to the application module 860. When the estimated channel state indicates that the client device is not receiving the multicast data stream well, the alert may be communicated in the form of a command to discontinue playback or other output presentation of the multimedia or real-time content. The alert may also be communicated in the form of a notification message, including the estimated channel state, to enable the application module 860 to decide whether to discontinue playback or other output presentation of the content based on the client device not receiving the multicast data stream well.

In some embodiments, the source computing device 880 and the sink computing devices 850 may implement a unified service discovery framework with enhanced peer-assisted resource management that may include service mediation and addressing control. Service mediation may include negotiating and/or downgrading the level of service to the peer client devices 850 (e.g., from 7.1 to 5.1 multi-channel surround sound). Service mediation may also include negotiating and upgrading the level of service when the wireless channel quality for the sink computing devices 850 is acceptable. Address control may include multicasting data to peer sink computing devices 850 that experience acceptable wireless channel quality and unicasting the same data to one or more client devices 850 that experience unacceptable wireless channel quality. The source computing device 880 may determine whether one or more client devices 850 is experiencing unacceptable channel quality based on the error logs, which may be communicated over new or existing channels of the service discovery framework. Communication of configuration information and/or error logs between the source computing device 880 and the sink computing devices 850 may be implemented through transmission of messages over existing channels of the service discovery framework.

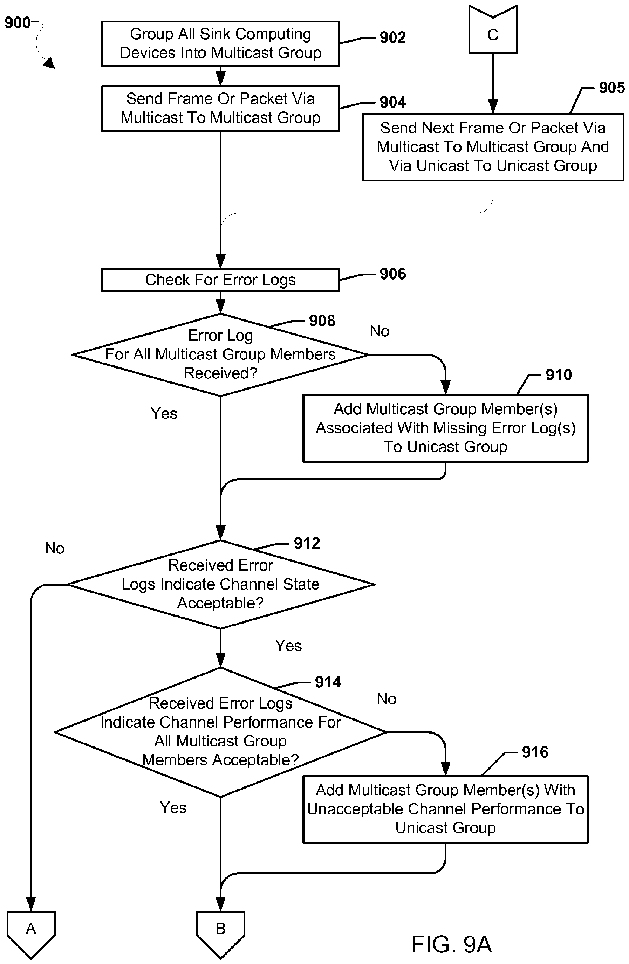

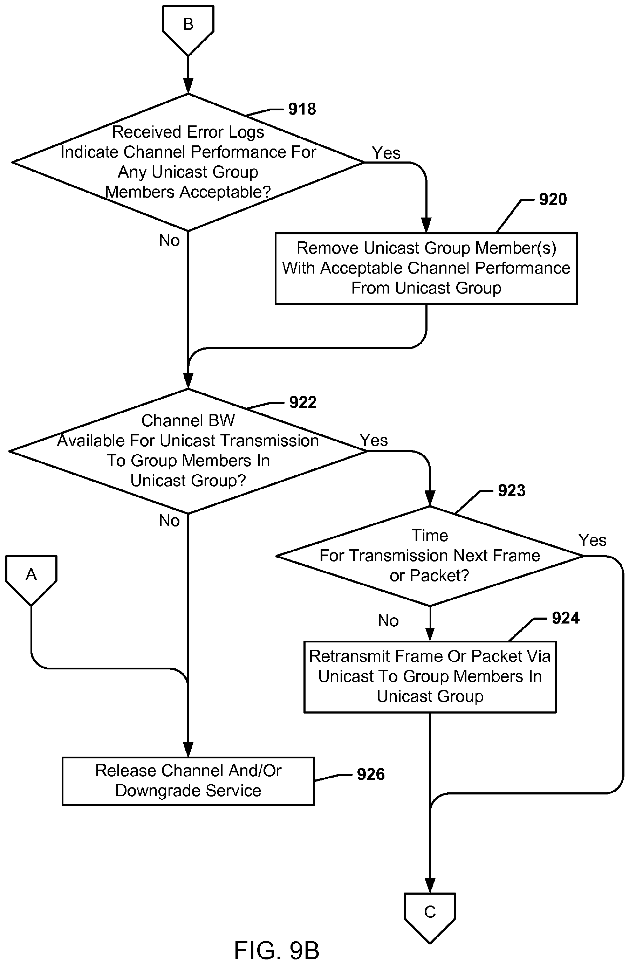

FIGs. 9A and 9B are process flow diagrams illustrating an embodiment method 900 for scalable data service (e.g., a multimedia data service) distribution in WiFi Miracast®. In an embodiment, the operations of method 800 may be performed by the processor of a source computing device. In block 902 (FIG. 9A) the processor or the source computing device may group all sink computing devices to receive a data service, such a multimedia data service (e.g., high definition audio, video, etc.,) into a multicast group. In block 904 the processor or the source computing device may send a frame or packet of the data service via multicast transmission (e.g., via WiFi Miracast® multicast transmission). In an embodiment, the frame or packet sent may include an indication to any receiving sink computing devices to generate and send an error log including state and/or performance indications back to the source computing device.

In block 906 the processor or the source computing device may check for received error logs. For example, the processor or the source computing device may determine whether any received error logs are stored in a memory location designated for the storage of error logs received from sink computing devices.

In determination block 908 the processor or the source computing device may determine whether an error log for all multicast group members has been received. The failure to receive an error log from a multicast group member may indicate that the group member was unreached by the multicast frame or packet because the group member did not respond with an error log. In response to determining that an error log for all multicast group members is not received (i.e., determination block 908 = "Yes"), the processor or the source computing device may add multicast group members associated with missing error logs to a unicast group in block 910. In this manner, sink computing devices for which error logs were not received may become members or both the multicast group and the unicast group.

In response to determining that an error log for all multicast group members is received (i.e., determination block 908 = "Yes") or in response to adding multicast group members to the unicast group in block 910, the processor or the source computing device may determine whether the received error logs indicate that the channel state is acceptable in determination block 912. For example, the processor or the source computing device may determine whether all or a portion (e.g., a majority, an average, etc.) of the received error logs indicate that a packet loss rate is below a maximum packet loss rate.

In response to determining that the received error logs indicate the channel state is acceptable (i.e., determination block 912 = "Yes"), the processor or the source computing device may determine whether any received error logs indicate that channel performance for all multicast group members is acceptable in determination block 914. In response to determining that channel performance for all multicast group members is not acceptable (i.e., determination block 914 = "No"), the processor or the source computing device may add any multicast group members with unacceptable channel performance to the unicast group in block 916. In this manner, sink computing devices for which error logs indicate that the channel performance for that specific sink computing device is unacceptable may become members or both the multicast group and the unicast group.

In response to determining that channel performance for all multicast group members is acceptable (i.e., determination block 914 = "Yes") or in response to adding multicast group members with unacceptable channel performance to the unicast group in block 916, the processor or the source computing device may determine whether the received error logs indicate that channel performance for any unicast group members are acceptable in determination block 918 (FIG. 9B). As discussed above the frame or packet may include an indication to generate and send an error log upon receipt, and upon receiving the retransmitted frame or packet via unicast transmission (e.g., WiFi Miracast® unicast transmission), the sink computing device may send an error log to the source computing device, for example via WiFi Miracast® unicast. The channel performance indicated by a unicast group member may qualify the unicast group member to be removed from the unicast group and revert to frames or packets being received only via multicast from the source computing device. In this manner, should channel performance for a sink computing device improve (e.g., due to the elimination of an interference source, etc.), unicast resources may no longer be dedicated to transmission to that sink computing device.

In response to determining that the received error logs indicate that channel performance for any unicast group members are acceptable (e.g., determination block 918 = "Yes"), the processor of the source computing device may remove the unicast group members with acceptable channel performance from the unicast group in block 920. In this manner, removed group members will no longer receive unicast retransmissions of the multicast frames or packets.

In response to determining that the received error logs do not indicate that channel performance for any unicast group members is acceptable (e.g., determination block 918 = "No") or in response to removing unicast group members from the unicast group in block 920, the processor of the source computing device may determine whether the channel bandwidth is available for unicast transmission to group members in the unicast group in determination block 922. In this manner, the source computing device may check whether the necessary band width is available to complete unicast transmissions to all current members of the unicast group.

In response to determining that bandwidth is available for the unicast transmissions (i.e., determination block 922 = "Yes"), the processor of the source computing device may determining whether the time for transmission of the next frame or packet is reached in determination block 923. For example, each frame or packet may be associated with a transmission time and based on the clock time at the source computing device the processor of the source computing device may determine whether a time for transmission of a next frame or packet is reached.

In response to determining that it is not time for transmission of the next frame or packet (i.e., determination block 923 = "No"), the processor of the source computing device may retransmit the frame or packet via unicast transmission (e.g., WiFi Miracast® unicast transmission) to the group members in the unicast group in block 924. For example, retransmission of frames or packets may include unsetting a flag associated with previously transmitted frames or packets buffered in a memory of the source computing device such that the un-flagged frames or packets may again be identified by the processor of the source computing device as un-transmitted, thereby causing the processor of the source computing device to retransmit the un-flagged frames or packets from the buffer. Through the retransmission of the frame or packet in block 924, additional attempts to provide the frame or packet beyond the original multicast transmission in block 904 (FIG. 9A) may be undertaken by the source computing device to attempt to ensure the unicast group members received the frame or packet.

In response to retransmitting the frame or packet via unicast in block 924 (FIG. 9B) or in response to determining that it is time for transmission of the next frame or packet (i.e., determination block 923 = "Yes"), the processor of the source computing device may send the next frame or packet via multicast to the multicast group and via unicast to the unicast group in block 905 (FIG. 9A).

In response to determining that the received error logs indicate that the channel state is not acceptable (i.e., determination block 912 = "No") or in response to determining that bandwidth is not available for the unicast transmissions (i.e., determination block 922 = "No"), the processor of the source computing device may release the channel and/or downgrade the service in block 926 (FIG. 9B). For example, the processor of the source computing device may switch to a lower quality representation of the service because the channel may not support acceptable transmission via multicast or because the channel may not support the unicast transmissions needed to correct for the frames or packets not received by sink computing devices via multicast.

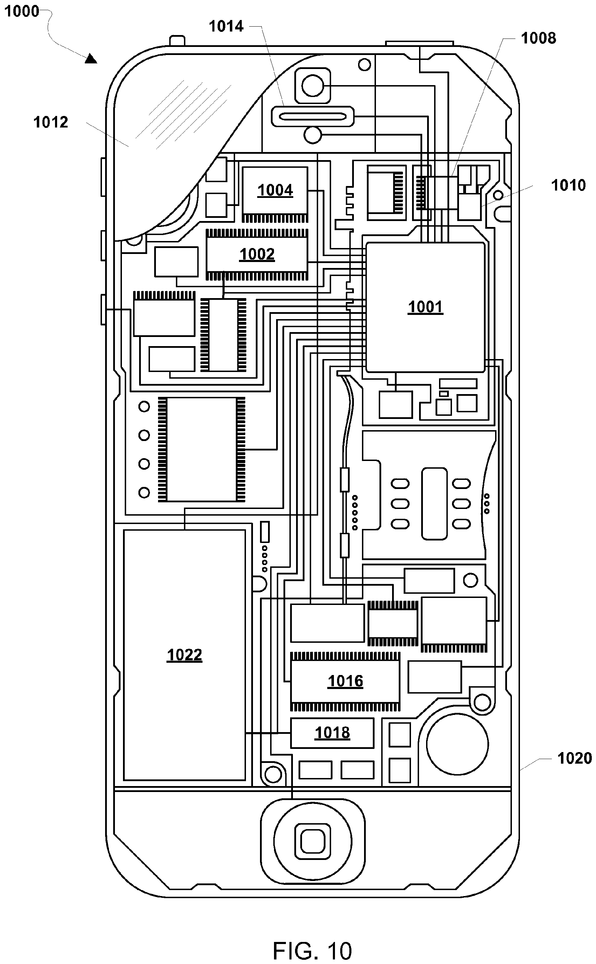

The various embodiments may be implemented in a variety of wireless computing devices, an example of which in the form of a mobile device 1000 is illustrated in FIG. 10. In various embodiments, the mobile device 1000 may include a processor 1001 coupled to a touch screen controller 1004 and an internal memory 1002. The processor 1001 may be one or more multi-core integrated circuits (ICs) designated for general or specific processing tasks. The internal memory 1002 may be volatile or non-volatile memory, and may also be secure and/or encrypted memory, or unsecure and/or unencrypted memory, or any combination thereof. The touch screen controller 1004 and the processor 1001 may also be coupled to a touch screen panel 1012, such as a resistive-sensing touch screen, capacitive-sensing touch screen, infrared sensing touch screen, etc.

The mobile device 1000 may have one or more radio signal transceivers 1008 (e.g., Bluetooth®, ZigBee®, WiFi®, RF radio) and antennae 1010, for sending and receiving, coupled to each other and/or to the processor 1001. The transceivers 1008 and antennae 1010 may be used with the above-mentioned circuitry to implement the various wireless transmission protocol stacks and interfaces. In some embodiments, the mobile device 1000 may include a cellular network wireless modem chip 1016 that enables communication via a cellular network and is coupled to the processor.

The mobile device 1000 may include a peripheral device connection interface 1018 coupled to the processor 1001. The peripheral device connection interface 1018 may be singularly configured to accept one type of connection, or multiply configured to accept various types of physical and communication connections, common or proprietary, such as universal serial bus (USB), Fire Wire, Thunderbolt, or PCIe. The peripheral device connection interface 1018 may also be coupled to a similarly configured peripheral device connection port (not shown).

The mobile device 1000 may also include speakers 1014 for providing audio outputs. The mobile device 1000 may also include a housing 1020, constructed of a plastic, metal, or a combination of materials, for containing all or some of the components discussed herein. The mobile device 1000 may include a power source 1022 coupled to the processor 1001, such as a disposable or rechargeable battery. The rechargeable battery may also be coupled to the peripheral device connection port to receive a charging current from a source external to the mobile device 1000.

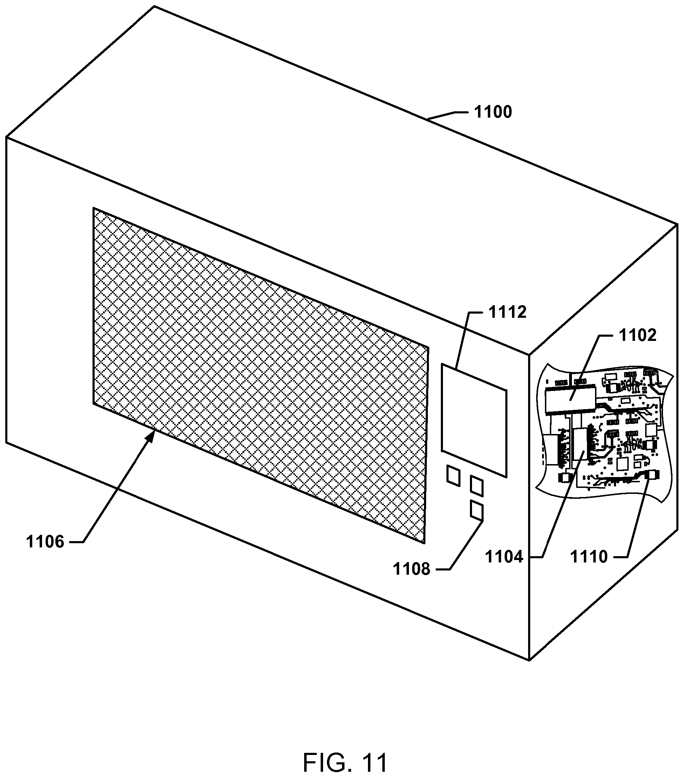

The various embodiments described above may also be implemented within a variety of computing devices, such as speaker unit 1100 illustrated in FIG. 11. A speaker unit 1100 may include a processor 1102 coupled to a memory 1104. The speaker unit 1100 may include a speaker 1106 that may be connected to the processor and configured to output sound. The speaker unit 1100 may also include one or more radio signal transceivers 1110 (e.g., Bluetooth®, ZigBee®, WiFi®, RF radio, etc.) and antennae, for sending and receiving, coupled to each other and/or to the processor 1102. The transceivers 1110 and antennae may be used with the above-mentioned circuitry to implement the various wireless transmission protocol stacks and interfaces). The speaker unit 1100 may also include a touchpad 1108 and display 1112 all coupled to the processor 1102.

The various processors described herein may be any programmable microprocessor, microcomputer or multiple processor chip or chips that can be configured by software instructions (applications) to perform a variety of functions, including the functions of the various embodiments described herein. In the various devices, multiple processors may be provided, such as one processor dedicated to wireless communication functions and one processor dedicated to running other applications. Typically, software applications may be stored in internal memory before they are accessed and loaded into the processors. The processors may include internal memory sufficient to store the application software instructions. In many devices the internal memory may be a volatile or nonvolatile memory, such as flash memory, or a mixture of both. For the purposes of this description, a general reference to memory refers to memory accessible by the processors including internal memory or removable memory plugged into the various devices and memory within the processors.

The foregoing method descriptions and the process flow diagrams are provided merely as illustrative examples and are not intended to require or imply that the operations of the various embodiments must be performed in the order presented. As will be appreciated by one of skill in the art the order of operations in the foregoing embodiments may be performed in any order. Words such as "thereafter," "then," "next," etc. are not intended to limit the order of the operations; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm operations described in connection with the embodiments disclosed herein may be implemented as electronic hardware, computer software, or combinations of both. To clearly illustrate this interchangeability of hardware and software, various illustrative components, blocks, modules, circuits, and operations have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the claims.

The hardware used to implement the various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some operations or methods may be performed by circuitry that is specific to a given function.

In one or more exemplary embodiments, the functions described may be implemented in hardware, software, firmware, or any combination thereof. If implemented in software, the functions may be stored on or transmitted over as one or more instructions or code on a non-transitory processor-readable, computer-readable, or server-readable medium or a non-transitory processor-readable storage medium. The operations of a method or algorithm disclosed herein may be embodied in a processor-executable software module or processor-executable software instructions which may reside on a non-transitory computer-readable storage medium, a non-transitory server-readable storage medium, and/or a non-transitory processor-readable storage medium. In various embodiments, such instructions may be stored processor-executable instructions or stored processor-executable software instructions. Tangible, non-transitory computer-readable storage media may be any available media that may be accessed by a computer. By way of example, and not limitation, such non-transitory computer-readable media may comprise RAM, ROM, EEPROM, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of non-transitory computer-readable media. Additionally, the operations of a method or algorithm may reside as one or any combination or set of codes and/or instructions on a tangible, non-transitory processor-readable storage medium and/or computer-readable medium, which may be incorporated into a computer program product.

The preceding description of the disclosed embodiments is provided to enable any person skilled in the art to make or use the claims. Various modifications to these embodiments will be readily apparent to those skilled in the art, and the generic principles defined herein may be applied to other embodiments without departing from the scope of the claims. Thus, the present invention is not intended to be limited to the embodiments shown herein but is to be accorded the widest scope consistent with the following claims and the principles and novel features disclosed herein.

## Claims

1. A method (800) of monitoring communication links in a wireless network comprising a source computing device and a sink computing device, the method performed by the sink computing device and comprising:
receiving (802) a multicast data stream carrying multimedia content for playback from the source computing device over the wireless network;
monitoring data elements within the received multicast data stream in real-time, the data elements including time or sequence information corresponding to the multimedia content;
estimating (804) a channel state based on the time or sequence information of the monitored data elements within the received multicast data stream;
determining whether the estimated channel state satisfies an error threshold;
generating (810) an error log including the estimated channel state in response to determining that the estimated channel state satisfies the error threshold;
transmitting the error log to the source computing device over an uplink channel of the wireless network; and
discontinuing playback of the multimedia content of the received multicast data stream in response to determining that the estimated channel state satisfies an error threshold.

2. The method of claim 1, further comprising the sink computing device:
determining whether an error log request is received from the source computing device; and
generating the error log including the estimated channel state in response to determining that the request is received.

3. The method of claim 1, wherein the multimedia content is surround sound audio data, the source computing device is a media player and the sink computing device is a speaker.

4. The method of claim 1, wherein the wireless network is a Wi-Fi Miracast® network.

5. The method of claim 1, wherein the estimated channel state is a packet loss rate and the error threshold is a maximum packet loss rate.

6. The method of claim 1, wherein operations of estimating the channel state, determining whether the estimated channel state satisfies the error threshold, and generating the error log are performed in one or more hardware modules.

7. A sink computing device, comprising:
means for receiving a multicast data stream carrying multimedia content for playback from a source computing device over a wireless network;
means for monitoring data elements within the received multicast data stream in real-time, the data elements including time or sequence information corresponding to the multimedia content;
means for estimating a channel state based on the time or sequence information of the monitored data elements within the received multicast data stream;
means for determining whether the estimated channel state satisfies an error threshold;
means for generating an error log including the estimated channel state in response to the means for determining determining that the estimated channel state satisfies the error threshold;
means for transmitting the error log to the source computing device over an uplink channel of the wireless network; and
means for discontinuing playback of the multimedia content of the received multicast data stream in response to determining that the estimated channel state satisfies an error threshold.

8. The sink computing device of claim 7, further comprising:
means for determining whether an error log request is received from the source computing device; and
means for generating the error log including the estimated channel state in response to determining that the request is received.

9. The sink computing device of claim 7, wherein the estimated channel state is a packet loss rate and the error threshold is a maximum packet loss rate.

10. The sink computing device of any one of claims 7 to 9, comprising:
a memory;
a radio comprising a receiver; and
a processor coupled to the memory and the radio;
wherein the processor is configured with processor-executable instructions to provide:
the means for receiving;
the means for monitoring;
the means for estimating;
the means for determining;
the means for generating;
the means for transmitting; and
the means for automatically discontinuing.

11. The sink computing device of claim 10, wherein the multimedia content is surround sound audio data, the source computing device is a media player and the sink computing device is a speaker.

12. The sink computing device of claim 10, wherein the wireless network is a Wi-Fi Miracast® network.

13. A non-transitory processor readable storage medium having stored thereon processor executable instructions configured to cause a processor of a sink computing device to perform operations for performing a method according to any one of claims 1 to 6.

14. The non-transitory processor-readable storage medium of claim 13, wherein operations of estimating the channel state, determining whether the estimated channel state satisfies the error threshold, and generating the error log are performed in one or more hardware modules.

## Patentansprüche

1. Ein Verfahren (800) zum Überwachen von Kommunikationsverbindungen in einem Drahtlosnetzwerk, das eine Quellenrechnereinrichtung und eine Senkenrechnereinrichtung aufweist, und das Folgendes aufweist:
Empfangen (802) eines Multicast-Datenstroms, der Multimediainhalt zum Abspielen von der Quellenrechnereinrichtung über das Drahtlosnetzwerk trägt;
Überwachen von Datenelementen innerhalb des empfangenen Multicast-Datenstroms in Echtzeit, wobei die Datenelemente, die Zeit- oder Sequenzinformation beinhalten, dem Multimediainhalt entsprechen;
Schätzen (804) eines Kanalzustandes basierend auf der Zeit- oder Sequenzinformation der überwachten Datenelemente innerhalb des empfangenen Multicast-Datenstroms;
Bestimmen, ob der geschätzte Kanalzustand einen Fehlerschwellenwert erfüllt;
Generieren (810) eines Fehlerberichts bzw. Fehler-Logs, das den geschätzten Kanalzustand beinhaltet, ansprechend auf Bestimmen, dass der geschätzte Kanalzustand den Fehlerschwellenwert erfüllt;
Senden des Fehler-Logs an die Quellenrechnereinrichtung über einen Uplink- bzw. Aufwärtsstreckenkanal des Drahtlosnetzwerks; und
Anhalten des Abspielens des Multimediainhalts des empfangenen Multicast-Datenstroms ansprechend auf Bestimmen, dass der geschätzte Kanalzustand einen Fehlerschwellenwert erfüllt.

2. Verfahren nach Anspruch 1, das weiter aufweist, dass die Senkenrechnereinrichtung:
bestimmt, ob eine Fehler-Log-Anfrage von der Quellenrechnereinrichtung empfangen wird; und
das Fehler-Log generiert, das den geschätzten Kanalzustand beinhaltet, ansprechend auf Bestimmen, dass die Anfrage empfangen worden ist.

3. Verfahren nach Anspruch 1, wobei der Multimedia-Inhalt Surround-Sound-Audiodaten sind, die Quellenrechnereinrichtung ein Medien-Player bzw. ein Medienabspielvorrichtung ist und die Senkenrechnereinrichtung ein Lautsprecher ist.

4. Verfahren nach Anspruch 1, wobei das Drahtlosnetzwerk ein Wi-Fi-Miracast®-Netzwerk ist.

5. Verfahren nach Anspruch 1, wobei der geschätzte Kanalzustand eine Paketverlustrate ist und der Fehlerschwellenwert eine maximale Paketverlustrate ist.

6. Verfahren nach Anspruch 1, wobei Operationen bzw. Vorgänge des Schätzens des Kanalzustandes, des Bestimmens, ob der geschätzte Kanalzustand den Fehlerschwellenwert erfüllt und des Generierens des Fehler-Logs in einem oder mehreren Hardwaremodulen durchgeführt werden.

7. Eine Senkenrechnereinrichtung, die Folgendes aufweist:
Mittel zum Empfangen eines Multicast-Datenstroms, der Multimediainhalt zum Abspielen von der Quellenrechnereinrichtung über das Drahtlosnetzwerk trägt;
Mittel zum Überwachen von Datenelementen innerhalb des empfangenen Multicast-Datenstroms in Echtzeit, wobei die Datenelemente, die Zeit- oder Sequenzinformation beinhalten, dem Multimediainhalt entsprechen;
Mittel zum Schätzen eines Kanalzustandes basierend auf der Zeit- oder Sequenzinformation der überwachten Datenelemente innerhalb des empfangenen Multicast-Datenstroms;
Mittel zum Bestimmen, ob der geschätzte Kanalzustand einen Fehlerschwellenwert erfüllt;
Mittel zum Generieren eines Fehlerberichts bzw. Fehler-Logs, das den geschätzten Kanalzustand beinhaltet, ansprechend darauf, dass die Mittel zum Bestimmen bestimmen, dass der geschätzte Kanalzustand den Fehlerschwellenwert erfüllt;
Mittel zum Senden des Fehler-Logs an die Quellenrechnereinrichtung über einen Uplink- bzw. Aufwärtsstreckenkanal des Drahtlosnetzwerks; und
Mittel zum Anhalten des Abspielens des Multimediainhalts des empfangenen Multicast-Datenstroms ansprechend auf Bestimmen, dass der geschätzte Kanalzustand einen Fehlerschwellenwert erfüllt.

8. Senkenrechnereinrichtung nach Anspruch 7, die weiter Folgendes aufweist:
Mittel zum Bestimmen, ob eine Fehler-Log-Anfrage von der Quellenrechnereinrichtung empfangen wird; und
Mittel zum Generieren des Fehler-Logs, das den geschätzten Kanalzustand beinhaltet, ansprechend auf Bestimmen, dass die Anfrage empfangen worden ist.

9. Senkenrechnereinrichtung nach Anspruch 7, wobei der geschätzte Kanalzustand eine Paketverlustrate ist und der Fehlerschwellenwert eine maximale Paketverlustrate ist.

10. Senkenrechnereinrichtung nach einem der Ansprüche 7 bis 9, die Folgendes aufweist:
einen Speicher;
eine Funkvorrichtung, die einen Empfänger aufweist; und
einen Prozessor, der an den Speicher und die Funkvorrichtung gekoppelt ist;
wobei der Prozessor konfiguriert ist mit von einem Prozessor ausführbaren Instruktionen um Folgendes vorzusehen:
die Mittel zum Empfangen;
die Mittel zum Überwachen;
die Mittel zum Schätzen;
die Mittel zum Bestimmen;
die Mittel zum Generieren;
die Mittel zum Senden; und
die Mittel zum automatischen Anhalten.

11. Senkenrechnereinrichtung nach Anspruch 10, wobei der Multimedia-Inhalt Surround-Sound-Audiodaten sind, die Quellenrechnereinrichtung ein Medien-Player bzw. ein Medienabspielvorrichtung ist und die Senkenrechnereinrichtung ein Lautsprecher ist.

12. Senkenrechnereinrichtung nach Anspruch 10, wobei das Drahtlosnetzwerk ein Wi-Fi-Miracast®-Netzwerk ist.

13. Ein nicht transitorisches prozessorlesbares Speichermedium mit darauf gespeicherten, von einem Prozessor ausführbaren Instruktionen, die konfiguriert sind einen Prozessor einer Senkenrechnereinrichtung zu veranlassen, Operationen bzw. Vorgänge zum Durchführen eines Verfahrens gemäß einem der Ansprüche 1 bis 6 durchzuführen.

14. Nicht transitorisches prozessorlesbares Speichermedium nach Anspruch 13, wobei die Operationen bzw. Vorgänge des Schätzens des Kanalzustandes, des Bestimmens, ob der geschätzte Kanalzustand den Fehlerschwellenwert erfüllt und des Generierens des Fehler-Logs in einem oder mehreren Hardwaremodulen durchgeführt werden.

## Revendications

1. Procédé (800) de surveillance de liaisons de communication dans un réseau sans fil comprenant un dispositif informatique source et un dispositif informatique récepteur, le procédé étant mis en oeuvre par le dispositif informatique récepteur et comprenant les étapes ci-dessous consistant à :
recevoir (802) un flux de données de multidiffusion transportant du contenu multimédia destiné à être lu à partir du dispositif informatique source sur le réseau sans fil ;
surveiller des éléments de données dans le flux de données de multidiffusion reçu, en temps réel, les éléments de données incluant des informations temporelles ou séquentielles correspondant au contenu multimédia ;
estimer (804) un état de canal sur la base des informations temporelles ou séquentielles des éléments de données surveillés dans le flux de données de multidiffusion reçu ;
déterminer si l'état de canal estimé satisfait un seuil d'erreur ;
générer (810) un journal d'erreurs incluant l'état de canal estimé, en réponse à la détermination selon laquelle l'état de canal estimé satisfait le seuil d'erreur ;
transmettre le journal d'erreurs au dispositif informatique source sur un canal de liaison montante du réseau sans fil ; et
interrompre la lecture du contenu multimédia du flux de données de multidiffusion reçu en réponse à la détermination selon laquelle l'état de canal estimé satisfait un seuil d'erreur.

2. Procédé selon la revendication 1, comprenant en outre les étapes ci-dessous, mises en oeuvre par le dispositif informatique récepteur, consistant à :
déterminer si une demande de journal d'erreurs est reçue en provenance du dispositif informatique source ; et
générer le journal d'erreurs incluant l'état de canal estimé, en réponse à la détermination selon laquelle la demande est reçue.

3. Procédé selon la revendication 1, dans lequel le contenu multimédia correspond à des données audio ambiophoniques, le dispositif informatique source est un lecteur multimédia et le dispositif informatique récepteur est un haut-parleur.

4. Procédé selon la revendication 1, dans lequel le réseau sans fil est un réseau Wi-Fi Miracast®.

5. Procédé selon la revendication 1, dans lequel l'état de canal estimé est un taux de perte de paquets, et le seuil d'erreur est un taux de perte de paquets maximum.

6. Procédé selon la revendication 1, dans lequel les étapes consistant à estimer l'état de canal, à déterminer si l'état de canal estimé satisfait le seuil d'erreur et à générer le journal d'erreurs, sont mises en oeuvre dans un ou plusieurs modules matériels.

7. Dispositif informatique récepteur, comprenant :
un moyen pour recevoir un flux de données de multidiffusion transportant du contenu multimédia destiné à être lu à partir d'un dispositif informatique source sur le réseau sans fil ;
un moyen pour surveiller des éléments de données dans le flux de données de multidiffusion reçu, en temps réel, les éléments de données incluant des informations temporelles ou séquentielles correspondant au contenu multimédia ;
un moyen pour estimer un état de canal sur la base des informations temporelles ou séquentielles des éléments de données surveillés dans le flux de données de multidiffusion reçu ;
un moyen pour déterminer si l'état de canal estimé satisfait un seuil d'erreur ;
un moyen pour générer un journal d'erreurs incluant l'état de canal estimé, en réponse à la détermination par le moyen de détermination que l'état de canal estimé satisfait le seuil d'erreur ;
un moyen pour transmettre le journal d'erreurs au dispositif informatique source sur un canal de liaison montante du réseau sans fil ; et
un moyen pour interrompre la lecture du contenu multimédia du flux de données de multidiffusion reçu en réponse à la détermination selon laquelle l'état de canal estimé satisfait un seuil d'erreur.

8. Dispositif informatique récepteur selon la revendication 7, comprenant en outre :
un moyen pour déterminer si une demande de journal d'erreurs est reçue en provenance du dispositif informatique source ; et
un moyen pour générer le journal d'erreurs incluant l'état de canal estimé, en réponse à la détermination selon laquelle la demande est reçue.

9. Dispositif informatique récepteur selon la revendication 7, dans lequel l'état de canal estimé est un taux de perte de paquets et le seuil d'erreur est un taux de perte de paquets maximum.

10. Dispositif informatique récepteur selon l'une quelconque des revendications 7 à 9, comprenant :
une mémoire ;
une radio comprenant un récepteur ; et
un processeur couplé à la mémoire et à la radio ;
dans lequel le processeur est configuré avec des instructions exécutables par processeur en vue de fournir :
le moyen de réception ;
le moyen de surveillance ;
le moyen d'estimation ;
le moyen de détermination ;
le moyen de génération ;
le moyen de transmission ; et
le moyen d'interruption automatique.

11. Dispositif informatique récepteur selon la revendication 10, dans lequel le contenu multimédia correspond à des données audio ambiophoniques, le dispositif informatique source est un lecteur multimédia et le dispositif informatique récepteur est un haut-parleur.

12. Dispositif informatique récepteur selon la revendication 10, dans lequel le réseau sans fil est un réseau Wi-Fi Miracast®.

13. Support de stockage non transitoire lisible par processeur sur lequel sont stockées des instructions exécutables par processeur configurées de manière à amener un processeur d'un dispositif informatique récepteur à mettre en oeuvre des opérations pour exécuter un procédé selon l'une quelconque des revendications 1 à 6.

14. Support de stockage non transitoire lisible par processeur selon la revendication 13, dans lequel des opérations consistant à estimer l'état de canal, à déterminer si l'état de canal estimé satisfait le seuil d'erreur, et à générer le journal d'erreurs, sont mises en oeuvre dans un ou plusieurs modules matériels.
